# EUROPEAN PATENT APPLICATION

(11) **EP 2 499 910 A1**
(43) Date of publication of application: **19.09.2012**
(21) Application number: 10830013.8
(22) Date of filing: 12.11.2010
(51) Int. Cl.: A01M 1/02, A01N 31/02, A01N 37/02, A01N 63/00, A01N 65/34, A01P 19/00

(54) **TERMITE EGG DISINFESTATION TECHNIQUE UTILIZING VOLATILE CALLING PHEROMONE AND QUEEN PHEROMONE**

(30) Priority: 13.11.2009 JP 2009259938
(71) Applicant: National University Corporation Okayama University, Kita-ku Okayama-shi Okayama 700-8530 (JP)
(72) Inventor: MATSUURA, Kenji, Okayama-shi Okayama 700-8530 (JP); HIMURO, Chihiro, Okayama-shi Okayama 700-8530 (JP); YOKOI, Tomoyuki, Okayama-shi Okayama 700-8530 (JP)
(74) Representative: Zwicker, Jörk
(86) International application number: PCT/JP2010/070187
(87) International publication number: WO 2011/059054

(57) **Abstract**

The present invention provides a termite attractant comprising 1-butanol, 2-butanol, or esters, ketones, ethers, carboxylic acids thereof, or salts thereof; a mimic termite-egg comprising the attractant; and a method for exterminating and controlling termites using the attractant or mimic termite-egg.

## Description

### [Technical Field]

The present invention provides a novel means for extermination and control of insect pests, in particular termites, and a method for their extermination and control using such a means. Specifically, the present invention provides a novel attractant for termites and a mimic termite-egg, as well as methods for extermination and control of termites using them. The present invention further provides a novel termite growth inhibitor.

The present application claims priority to Japanese Patent Application No. 2009-259938, filed November 13, 2009, which is incorporated herein in its entirety by reference thereto.

### [Background Art]

Techniques which have been heretofore used for exterminating insect pests, especially termites, are those by which basically, large amounts of pesticides are applied to the outside of pest-damaged timber such that the insect pests are killed, and thus lead to health damages, such as sick house syndrome, and environmental pollution. In addition, there is a problem that damages are spread in other places when even a portion of the termites' colony remains surviving. A problem of the greatest importance is that labor costs required for extermination with these techniques are too high. Methods which are frequently carried out are those by fumigation using methyl bromide, which is a substance causing the destruction of the ozone layer and thus, in these days, results in enhanced movements to regulate its use.

As an alternative to the treatment method based on spraying pesticides, a bait method is known in which slow-acting, pesticidally active ingredients are mixed into a bait, and the bait is allowed to be eaten by termites, thereby making in their extermination (see, for example, non-paten document 1).

As methods for exterminating ants which organize a social life as in the case of termites, methods are effective in which poisonous materials are mixed into an ants' favorite food, which is given to ants as bait and allowed to be taken back into their nest, thereby killing the whole population within the nest. However, these bait methods in which poisonous baits are employed for allowing termites to carry pesticides from the outside to the inside of their nest are not always effective, since termites eat wood timbers themselves where they nest. In particular, it is difficult to eradicate termites of the genus Reticulitermes by bait methods (see, non-paten document 2).

As a method which results in more efficient intake of an active ingredient by insect pests than the above-described bait methods, a "method for extermination of insect pests by carrying of mimic eggs" was developed, wherein the method utilizes the instinct to carry eggs, a fundamental social behavior of insect pests (paten document 1). The major ingredients of a termite egg recognition pheromone are lysozyme, which is an antibacterial protein (paten document 2), and β-glucosidase (paten document 3), each of which has been demonstrated to have egg-recognition pheromone activity alone.

### [Citation List]

### [Non-Patent Literature]

[Patent Literature 1]
   JP-B1-4151812
[Patent Literature 2]
   JP-B1-4126379
[Patent Literature 3]
   JP-B1-4258785

### [Non-Patent Literature]

[Non-Patent Literature 1]
   "Termites and Control Measures," Corporation Aggregate Japan Termite Control Association, 2000, pp. 219.
[Non-Patent Literature 2]
   "Activity Evaluation of Japanese Subterranean Termites Using Monitoring Stations and Control by Bait Methods," Recent Developments of Monitoring Technologies of Insect Ecology in Sustainable Humanmosphere, 2006, pp. 48.

### [Summary of Invention]

### [Technical Problem]

It has been already demonstrated that the major ingredients of a termite egg recognition pheromone are, as its constituents, lysozyme, which is an antibacterial protein, and β-glucosidase, which is known to be a digestive enzyme in termites. In arena tests within petri dishes in conventional techniques, that is, experiments based on the premise that termites touch mimic eggs, an artificial pheromone brought about egg-carrying rates comparable to those obtained by an egg-extracted pheromone. This means that sufficient activity for the egg recognition pheromone was able to be obtained. However, in experiments in which mimic eggs located outside a nest of termites were allowed to be taken back into the nest by scout workers going out of the nest, the average rate of carrying of mimic eggs was decreased relative to genuine eggs and the rates of carrying of mimic eggs were varied. This indicates that additional techniques are required for increasing the rate of carrying of mimic eggs, in cases where termite exterminating agents based on mimic eggs are allowed to be carried into the nest from introduction stations placed outside the nest.

### [Solution to Problem]

The present inventors have devoted themselves to research in view of the problems described above. In order to improve the rate of carrying of mimic eggs which termites carry from the outside to the inside of the nest, the present inventors made an analysis of of the behaviors of termites going out of the nest in searching for eggs.
It was understood from the results of the analysis using a calling pheromone released from eggs (i.e. a volatile attracting substance) that worker termites distant from the nest sense the presence of eggs. This egg-released volatile pheromone was released in high amounts from living eggs, and eggs died due to cryopreservation exhibited decreased activities. Therefore, it has been revealed that this pheromone is a calling pheromone which is actively emitted from the eggs to direct the worker termites towards the eggs.

A termite egg recognition pheromone comprises lysozyme and β-glucosidase as its ingredients which are involatile substances. These pheromones are substances for a termite to recognize that when its sensory organs have made contact with a mimic egg, the touched object is an egg, but they have no action of directing a distant worker termite toward an egg. In addition, mimic eggs having no egg recognition pheromone are not carried as egg, even in the presence of the egg's calling pheromone. From these, it was understood that a volatile calling pheromone, which allows directing a worker termite to the location of a pheromone-releasing egg, and an egg recognition pheromone, which allows recognizing an egg by touching it, are both required.

An analysis was made of volatile ingredients using head-space GC-MS, in order to identify these chemical substances which are released from eggs and attract distant worker termites. The head-space GC-MS analysis of volatile materials emitted from living eggs gave two clear spectra, of which library searching enabled a first peak to be attributed to butyric acid normal butyl ester (butyl butyrate) or isobutyl ester (2-butyl butyrate). Also for a second peak, it was attributable to 2-methyl-1-butanol.

An analysis of volatile materials released from termite queens was also made, as in the case of eggs. Two spectra which were exactly the same as those obtained with eggs were obtained. Their library searching enabled a first peak to be attributed to butyric acid normal butyl ester (butyl butyrate) or isobutyl ester (2-butyl butyrate). Also for a second peak, it was attributable to 2-methyl-1-butanol.

Furthermore, it also turned out that butanol derivatives had activity of attracting worker termites.

It was also found for the first time that the differentiation into new termite queens was inhibited in the presence of volatile ingredients released from termite eggs and queens, and it was demonstrated that volatile ingredients released from termite eggs and queens inhibit the growth of termites.

The present invention has been achieved based on the findings described above. The present invention provides:
(1) A termite attractant comprising one or more active ingredients selected from the group consisting of butanols, and esters, ketones, ethers, carboxylic acids thereof, and salts thereof;
(2) A termite attractant comprising one or more active ingredients selected from the group consisting of 1-butanol, 2-butanol, butyric acid ester of 1-butanol, butyric acid ester of isobutyl alcohol, and 2-methyl-1-butanol;
(3) A termite attractant comprising one or more active ingredients selected from the group consisting of 1-butanol, 2-butanol, or 2-methyl-1-butanol;
(4) A mimic termite-egg comprising an egg recognition pheromone and a termite attractant according to any one of (1) to (3) in a termite-egg mimicking substrate;
(5) The mimic termite-egg according to (4), wherein the egg recognition pheromone is a β-glucosidase and/or a lysozyme;
(6) A mimic termite-egg comprising a β-glucosidase as an egg recognition pheromone and a termite attractant according to any one of (1) to (3) in a termite-egg mimicking substrate;
(7) The mimic egg according to any one of (4) to (6), which further comprises one or more ingredients selected from the group consisting of a pesticidally active ingredient, a hatch inhibitor, a reproductive inhibitor, an ingredient with growth inhibiting activity, or an insect pathogen;
(8) A method for exterminating termites, which comprises proving a termite with a mimic egg according to (7), and allowing the termite to carry the mimic egg into its nest by taking advantage of egg-carrying behavior;
(9) A method for exterminating termites, which comprises placing a termite attractant according to any one of (1) to (3) around a mimic egg which contains an egg recognition pheromone, and one or more ingredients selected from the group consisting of a pesticidally active ingredient, a hatch inhibitor, a reproductive inhibitors, an ingredient with growth inhibiting activity, or an insect pathogen in a termite-egg mimicking substrate; and allowing the termite to carry the mimic egg into its nest by taking advantage of egg-carrying behavior;
(10) A method for exterminating termites, which comprises employing a termite attractant according to any one of (1) to (3) to attract termites; and exterminating the attracted termites;
(11) A method for disturbing the behavior of a termite, which comprises providing a termite attractant according to any one of (1) to (3) to a termite, thereby to disturb the behavior of the termite;
(12) A termite growth inhibitor comprising one or more active ingredients selected from the group consisting of butanols, and esters, ketones, ethers, carboxylic acids thereof, and salts thereof;
(13) A termite growth inhibitor comprising one or more active ingredients selected from the group consisting of 1-butanol, 2-butanol, butyric acid ester of 1-butanol, butyric acid ester of isobutyl alcohol, and 2-methyl-1-butanol; and
(14) A termite growth inhibitor comprising one or more active ingredients selected from the group consisting of butyl butyrate and 2-methyl-1-butanol.

### [Advantageous Effects of Invention]

The attractants according to the present invention are capable of effectively attracting termites. Containing the inventive attractants in mimic termite-eggs makes it possible to dramatically enhance more effectively the activity of carrying these mimic eggs and to considerably increase the efficiency of extermination or control of termites by carrying of these mimic eggs. Based on this, the present invention is successful in attracting worker termites distant from eggs and inducing a strong carrying behavior by using the egg volatile calling pheromone as an attractant. This success has enabled the present inventors to establish a technique for dramatically enhancing the activity of carrying mimic-egg based extermination agents, thereby allowing termites to actually carry large numbers of mimic eggs from the outside to the inside of their nest in the field. In addition, the egg volatile calling pheromone is composed of the same ingredients as those of the termite queen pheromone, and can inhibit the differentiation into new termite queens, making it possible to prevent termite individuals surviving an extermination treatment from forming a new colony.

### [Brief Description of Drawings]

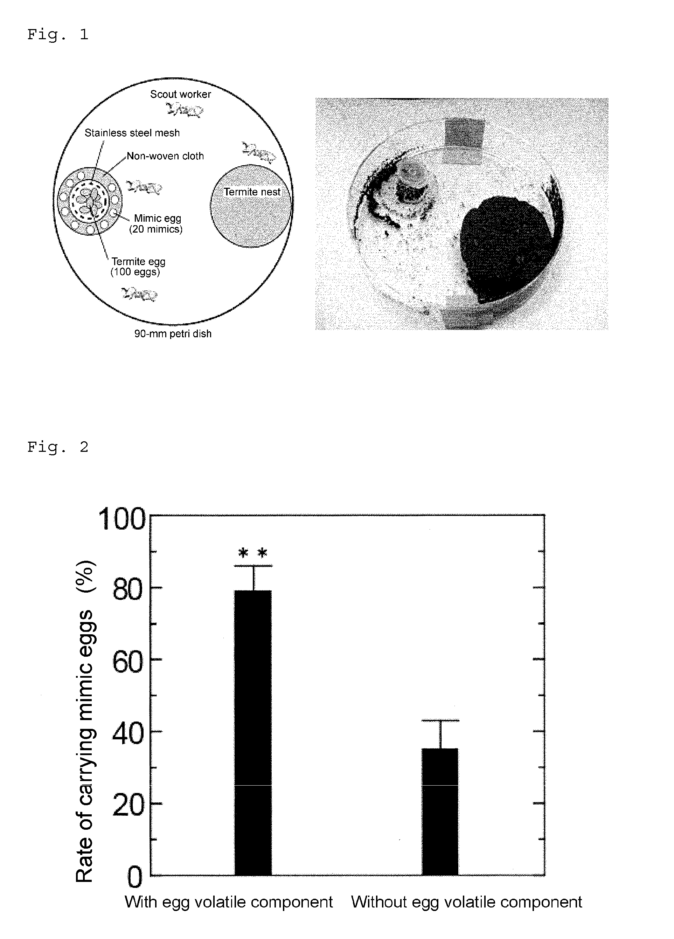

[Fig.1] The photograph on the right in Fig. 1 shows an experimental setup for measuring the activity of the egg volatile calling pheromone and the illustration on the left represents its schematic. A hundred of eggs are placed with the eggs being surrounded with a stainless steel mesh, and termites cannot touch the eggs which are present in the inside of the mesh. Mimic eggs are placed outside and along the mesh. In the control, no eggs are present in the inside of the mesh.
[Fig.2] Fig.2 is a graph showing rates of mimic eggs carried into the nest in a period of 24 hours from the start of the experiment. *** indicates a significant difference at a significance level of 0.1% (two-sided T-test) relative to the control. The error bars in the figure represent standard deviation.

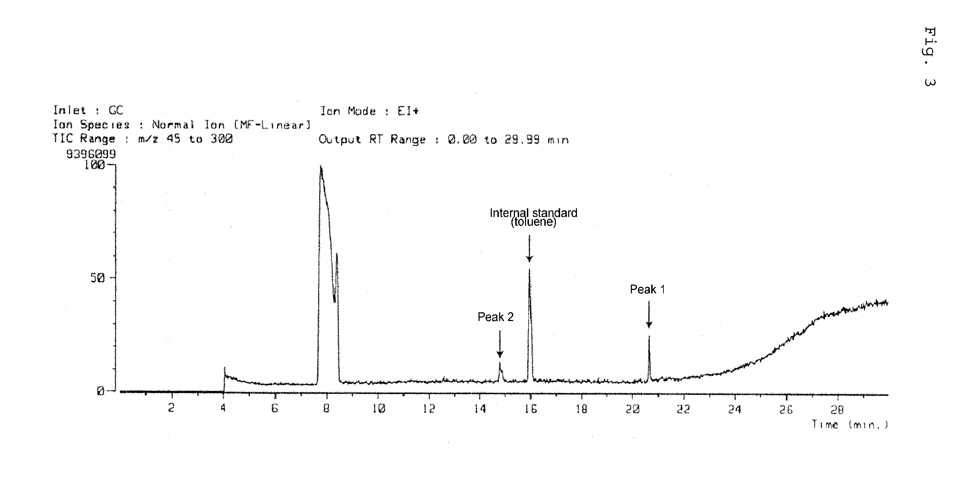

[Fig.3] Fig. 3 is a chromatogram data from GC-MS analysis of the termite egg volatile calling pheromone. The abscissa axis represents retention time (in minutes) and the ordinate axis represents relative intensity of peaks. Peak 1 was attributable to a normal butyl ester (butyl butyrate) or butyric acid isobutyl ester (2-butyl butyrate). Peak 2 was attributable to 2-methyl-1-butanol.

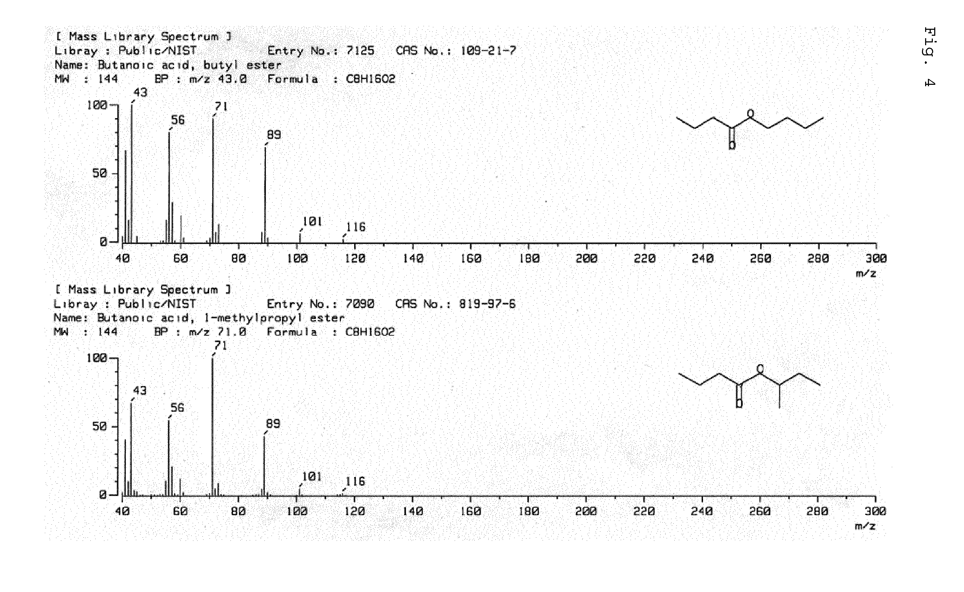

[Fig.4] Fig. 4 represents the results from library searching for a candidate of Peak 1 which is estimated from the mass spectrum obtained by GC-MS analysis on termite eggs. The abscissa axis represents m/z and the ordinate axis represents relative intensity of peaks.

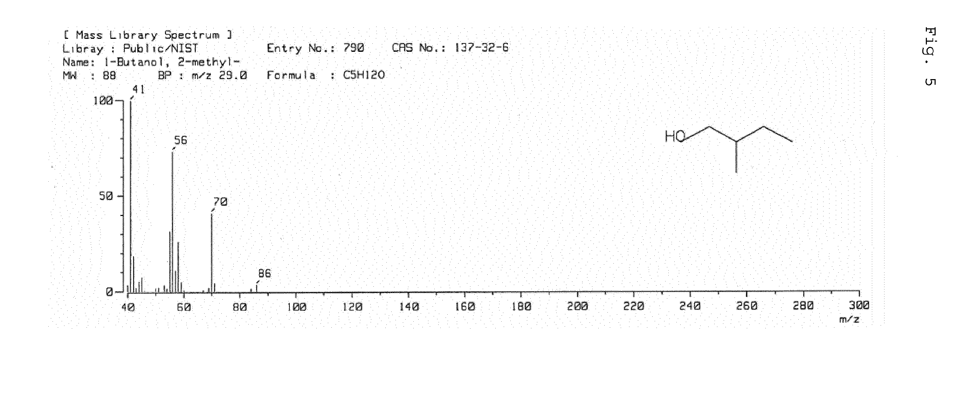

[Fig.5] Fig. 5 represents the result from library searching for a candidate of Peak 2 which is estimated from the mass spectrum obtained by GC-MS analysis on termite eggs. The abscissa axis represents m/z and the ordinate axis represents relative intensity of peaks.

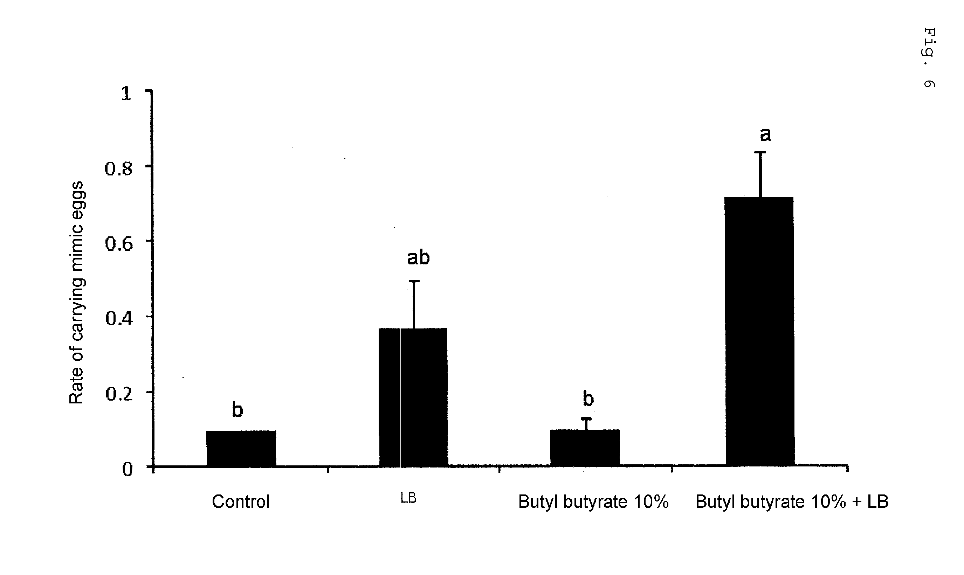

[Fig.6] Fig. 6 is a graph showing rates of mimic eggs carried into the nest in a period of 24 hours from the start of the experiment. The error bars in the figure represent standard deviation. There were observed significant differences between the different alphabets (Tukey-Kramer HSD test). The addition of butyl butyrate was able to enhance the activity of carrying mimic eggs, as compared to no addition, but there was no difference of statistical significance.

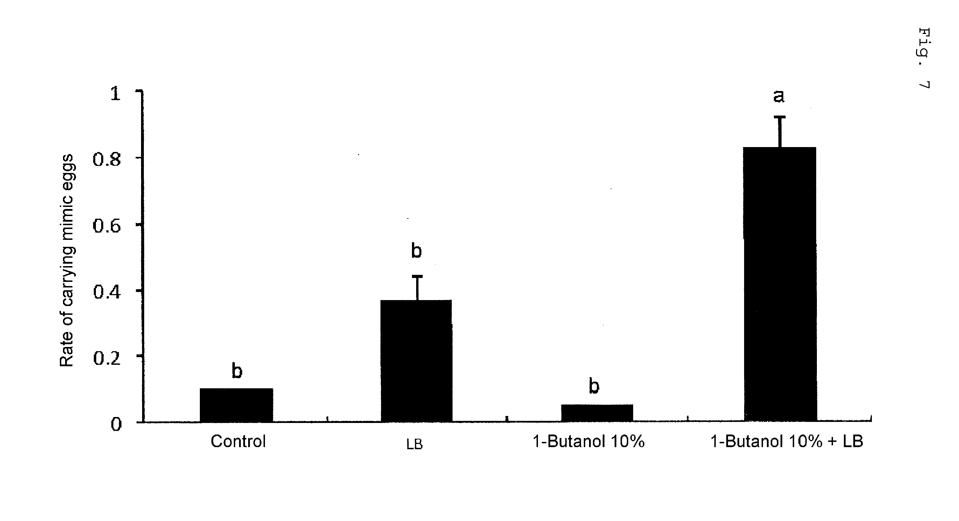

[Fig.7] Fig. 7 is a graph showing rates of mimic eggs carried into the nest in a period of 24 hours from the start of the experiment. The error bars in the figure represent standard deviation. There were observed significant differences between the different alphabets (Tukey-Kramer HSD test). The addition of 1-butanol was able to significantly enhance the activity of carrying mimic eggs, as compared to no addition.

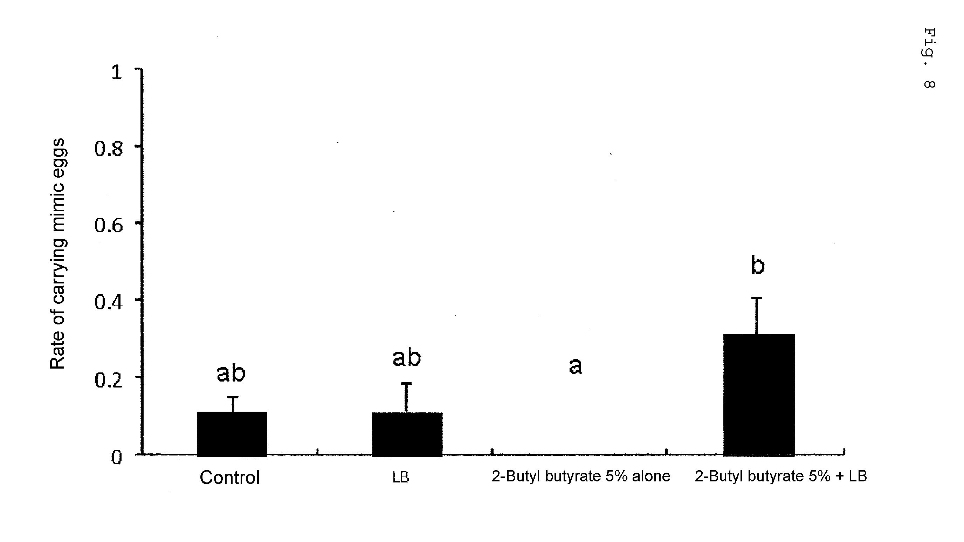

[Fig.8] Fig. 8 is a graph showing rates of mimic eggs carried into the nest in a period of 24 hours from the start of the experiment. The error bars in the figure represent standard deviation. There were observed significant differences between the different alphabets (Tukey-Kramer HSD test). The addition of 2-butyl butyrate was able to enhance the activity of carrying mimic eggs, as compared to no addition, but there was no difference of statistical significance.

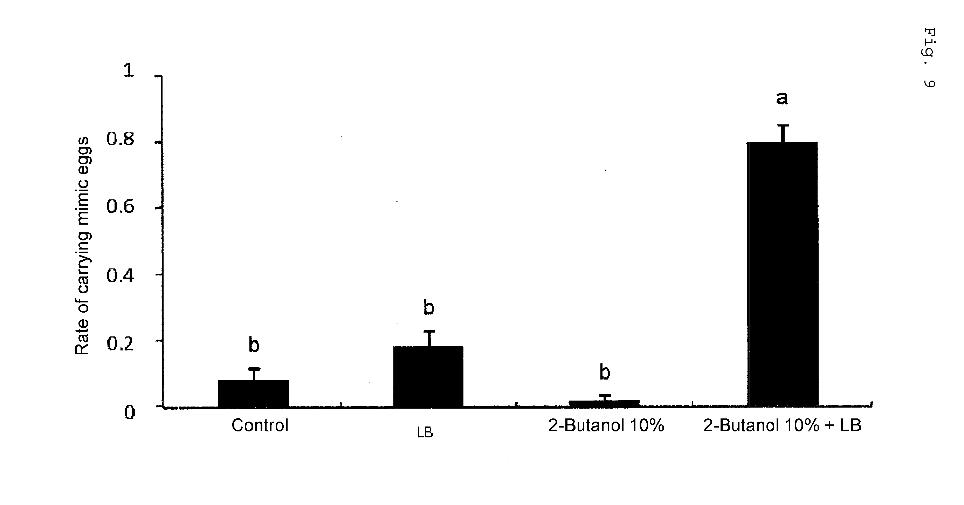

[Fig.9] Fig. 9 is a graph showing rates of mimic eggs carried into the nest in a period of 24 hours from the start of the experiment. The error bars in the figure represent standard deviation. There were observed significant differences between the different alphabets (Tukey-Kramer HSD test). The addition of 2-butanol was able to significantly enhance the activity of carrying mimic eggs, as compared to no addition.

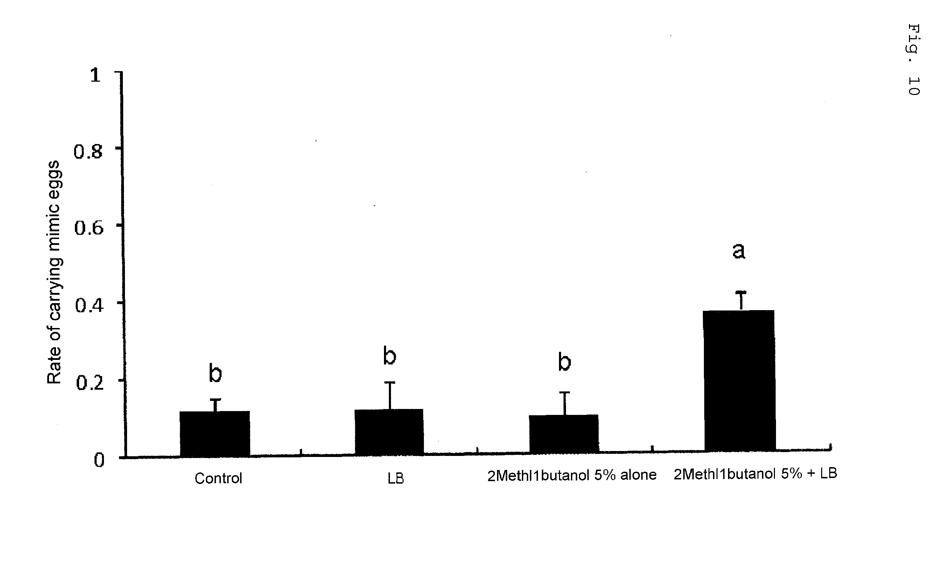

[Fig.10] Fig. 10 is a graph showing rates of mimic eggs carried into the nest in a period of 24 hours from the start of the experiment. The error bars in the figure represent standard deviation. There were observed significant differences between the different alphabets (Tukey-Kramer HSD test). The addition of 2-methyl-1-butanol was able to significantly enhance the activity of carrying mimic eggs, as compared to no addition.

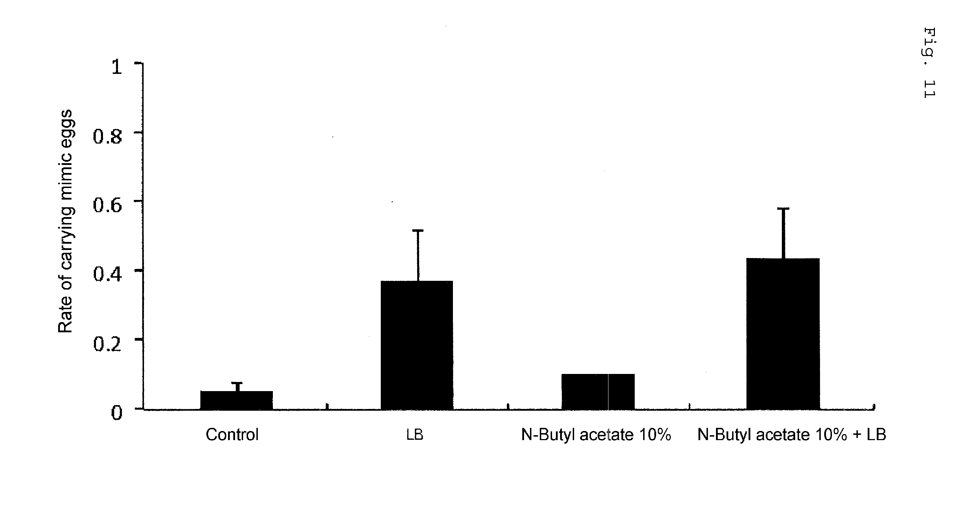

[Fig.11] Fig. 11 is a graph showing rates of mimic eggs carried into the nest in a period of 24 hours from the start of the experiment. The error bars in the figure represent standard deviation. The n-butyl acetate had no activity of enhancing the activity of carrying mimic eggs.

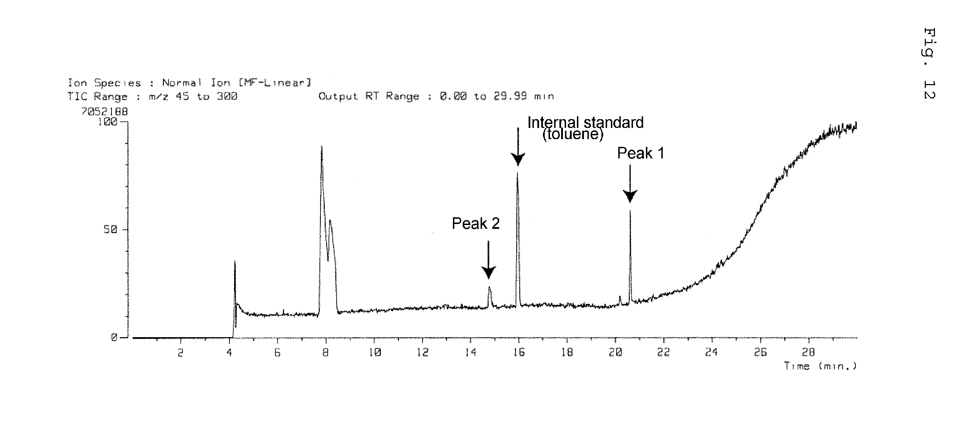

[Fig.12] Fig. 12 is a chromatogram data from GC-MS analysis of the termite queen volatile pheromone. The abscissa axis represents retention time (in minutes) and the ordinate axis represents relative intensity of peaks. Peak 1 was attributable to a normal butyl ester (butyl butyrate) or butyric acid isobutyl ester (2-butyl butyrate). Peak 2 was attributable to 2-methyl-1-butanol.

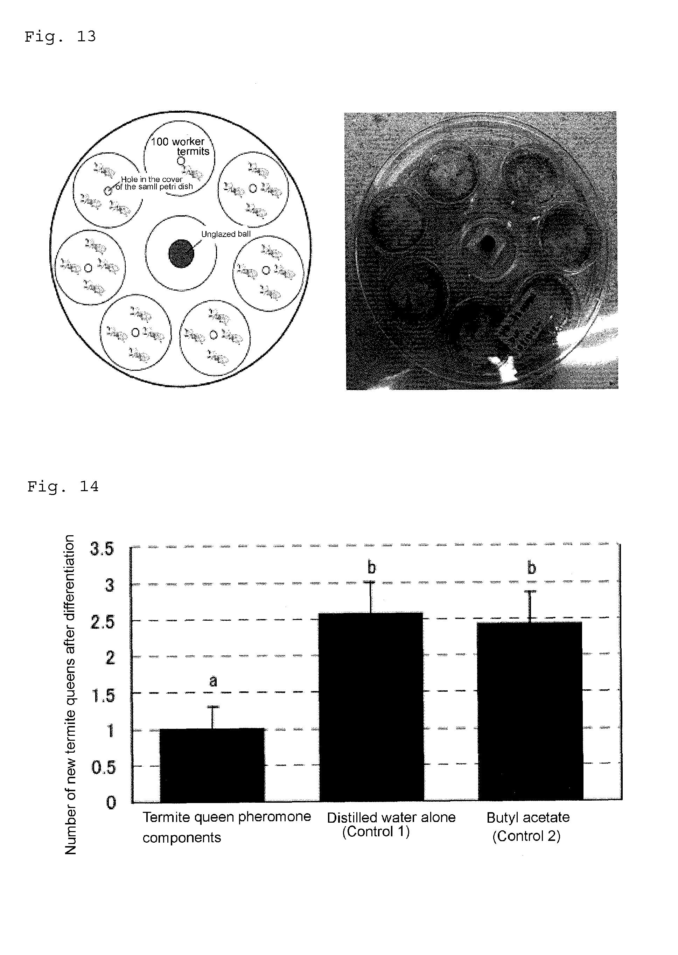

[Fig.13] The photograph on the right in Fig. 13 shows an experimental setup for measuring the activity of inhibiting the differentiation into new termite queens by the termite queen volatile pheromone and the illustration on the left represents its schematic. Seven small petri dishes, in each of which a hundred of Reticulitermes speratus worker termites were placed, were placed in a large petri dish, in the center of which an unglazed ball of a diameter of 7 mm comprising a volatile pheromone was placed. The cover of each of the small petri dishes has a hole, through which the pheromone volatilized from the unglazed ball enters the small petri dish. As a control, the same amount of distilled water or butyl acetate, which was used instead of each pheromone ingredient, was applied at the same frequency.
[Fig.14] Fig. 14 is a graph showing the numbers of termite individuals which had differentiated into new termite queens in each of the small petri dishes in a period of 25 days from the start of the experiment. The error bars in the figure represent standard deviation. There were observed significant differences between the different alphabets (Tukey-Kramer HSD test). It was found that treatments in which the termite queen pheromones, butyl butyrate and 2-methyl-1-butanol, were applied, were able to significantly inhibit the differentiation from a worker termite into a new termite queen, as compared to the controls.

### [Description of Embodiments]

The following explanation is made with reference to termites as an example of insect pests. The present invention, however, can be applied to insects, in particular insect pests, which recognize butanol derivatives. The attractants and growth inhibitors according to the present invention are most effective against termites. Termites to which the present invention are applicable are of any kind, and can be termites not only in Japan, but also around the world. Typical termites which can be exterminated according to the present invention include, but are not limited to, those of the genera Reticulitermes, Coptotermes, and others. In the specification, extermination of insect pests is intended to include control of insect pests. In the specification, an insect pest refers to an insect which has harmful effects on humans and domestic animals, agricultural produce, property, and the like.

The lysozyme and β-glucosidase known until now and which are ingredients of the termite egg recognition pheromone are involatile substances, which can be recognized by termites when they touch mimic eggs, but which are not substances for sensing eggs from a distant position. Based on these, the present inventors made additional studies and has found that the process in which worker termites recognize eggs and then carry eggs is mediated by a two-stage recognition as follows. At the first stage, by the egg volatile calling pheromone, a worker termite senses a distant egg and is directed to the location of the egg. At the second stage, the worker termite touches the egg, and recognizes the egg by the egg recognition pheromone on its surface and carries them.

In this study, the present inventors identified the termite egg volatile calling pheromone. Accordingly, it was found that as the termite egg volatile calling pheromone, butanols or derivatives thereof was able to be used to attract termites. Thus, the present inventors successfully used these substances to attract worker termites which were away from mimic eggs and to drive the worker termites to carry them, and succeeded in achieving dramatically increased rates of egg carrying.

Therefore, the present invention, in an aspect thereof, provides a termite attractant which comprises one or more active ingredients selected from the group consisting of butanols and derivatives thereof. Herein, butanols include 1-butanol, 2-butanol, t-butanol, and isobutyl alcohol. Derivatives of butanols which can be used as the active ingredient of a termite attractant according to the present invention include esters, ketones, ethers or carboxylic acids, or salts thereof, etc. Therefore, the present invention, in another aspect thereof, provides a termite attractant which comprises one or more active ingredients selected from the group consisting of butanols, and esters, ketones, ethers, carboxylic acids thereof, and salts thereof. In these derivatives, one or more hydrogens on a carbon may be substituted with a substituent, such as a halogen, a hydroxyl group, a thiol group, a cyano group, an amino group, a nitro group, a carboxyl group, an alkyl group having one to six carbons, an -O-alkyl group having one to six carbons.

As a more preferable active ingredient of an attractant according to the present invention is a butanol, or an ester of a butanol and a C1-C6 carboxylic acids. A C1-C6 carboxylic acid refers to an acid in which a carboxyl group is attached to an alkyl group having one to six carbons, and includes formic acid, acetic acid, propionic acid, butyric acid, pentanoic acid, hexanoic acid, and geometrical isomers thereof. Preferable among the esters described above is an ester of butanol and butyric acid.
As a further preferable active ingredient of an attractant according to the present invention are 1-butanol, 2-butanol, isobutyl alcohol, butyric acid ester of 1-butanol, butyric acid ester of 2-butanol, and butyric acid ester of isobutyl alcohol. Therefore, the present invention provides a termite attractant which contains one or more active ingredients selected from the group consisting of 1-butanol, 2-butanol, isobutyl alcohol, butyric acid ester of 1-butanol, butyric acid ester of 2-butanol, and butyric acid ester of isobutyl alcohol. Particularly preferable among these active ingredients are 1-butanol, 2-butanol, butyric acid ester of 1-butanol, and butyric acid ester of isobutyl alcohol. Therefore, the present invention provides a termite attractant which contains one or more active ingredients selected from the group consisting of 1-butanol, 2-butanol, butyric acid ester of 1-butanol, and butyric acid ester of isobutyl alcohol. As the most preferable active ingredient of an attractant according to the present invention are 1-butanol and 2-butanol. Therefore, the present invention provides a termite attractant which contains one or more active ingredients selected from the group consisting of 1-butanol and 2-butanol.

As used in the specification, a "termite attractant" or "attractant" is intended to include one that contains as the active ingredient one or more of the above-described substances. Attractants according to the present invention may consist of the above-described substance(s) or may comprise, in addition to the above-described substance(s), carriers, excipients, solvents, colorings, flavors, and others. Carriers, excipients, solvents, colorings, flavors, and others which can be used in the termite attractants according to the present invention can be any ones and are not particularly limited, as long as they neither inhibit the activity of the active ingredient(s) nor prevent the active ingredient(s) from volatilizing. Formulation forms of the attractants according to the present invention are not particularly limited, and can be selected as appropriate, depending on their application and use. For example, the attractants according to the present invention may be contained in mimic eggs as described below or may be in the form, for example, of liquids, sprays, capsules, tablets, granules, pastes, powders, and the like,.

By making an attractant according to the present invention contained in mimic termite-eggs, it possible to dramatically enhance the activity of carrying these mimic eggs and to considerably increase the efficiency of extermination or control of termites by carrying of these mimic eggs. For example, the efficiency of extermination/control of termites can be dramatically enhanced by making an attractant according to the present invention contained in, for example, mimic termite-eggs as described in Japanese Patent No. 4126379 or 4258785, which contain a termite egg recognition pheromone, such as a lysozyme and a β-glucosidase, and a pesticidally active ingredient, and employing these mimic termite-eggs.

Therefore, the present invention, in a further aspect, provides a mimic termite-egg which contains in a termite-egg mimicking substrate an egg recognition pheromone and a termite attractant according to the present invention. A termite egg recognition pheromone which is preferable is a lysozyme or a β-glucosidase, and a lysozyme and a β-glucosidase may be used solely or in combination.

Mimic eggs which are used in the present invention should have shapes, sizes, and properties similar to those of the eggs of insect pests to be exterminated. In the case of termites, the form of mimic eggs can be long-oval or spherical. When the mimic termite-eggs are long-oval, their short diameter is preferably comparable to or slightly longer than that of the eggs of termites to be exterminated. For example, the short diameter of long-oval mimic eggs which mimic termite eggs having a short diameter of about 0.25 to about 0.45 millimeters may be about 0.25 to about 0.6 millimeters, preferably about 0.4 to about 0.55 millimeters, further preferably about 0.45 millimeters. When the mimic termite-eggs are spherical, their diameter is preferably comparable to or slightly longer than the short diameter of the eggs of termites to be exterminated. For example, the diameter of spherical mimic eggs which mimic termite eggs having a short diameter of about 0.25 to about 0.45 millimeters may be about 0.25 to about 0.6 millimeters, preferably about 0.4 to about 0.6 millimeters, further preferably about 0.45 to about 0.55 millimeters. Spherical mimic eggs are preferable in terms of the ease of formation.

Substrates of the mimic eggs according to the present invention can be any materials, as long as they can be used to make mimic eggs of which shapes and properties are similar to those of the genuine eggs of target insect pests. Substrate materials which are preferable for making the mimic eggs according to the present invention include, for example, thermoplastic resins, such as polyethylene, polypropylene, polystyrene, polyester, polyvinyl chloride, and polycarbonate; or thermosetting resins, such as urea resins, epoxy resins, phenol resins, and polyurethane resins; porous materials, such as silica gels and zeolites; ceramics, glass, and others.

It is necessary that the mimic eggs according to the present invention are the same as or similar to the genuine eggs of target insect pests not only in physical properties, such as shape and size as described above, and additionally weight and hardness, but also in chemical properties, particularly egg recognition pheromone. Therefore, in case a lysozyme and/or a β-glucosidase are/is contained in substrates of the mimic eggs as the egg recognition pheromone, it is necessary that these substances are present on the substrate surface.

A lysozyme which can be used in the mimic eggs according to the present invention may be one derived from any species or produced by gene recombination. A preferable lysozyme is one derived from hen egg white. Lysozyme derived from hen egg white is available in large amounts and at low cost. A lysozyme employed in the present invention may or may not be purified. A lysozyme salt may be employed as the egg recognition pheromone. A lysozyme salt may be one with any salt-formable substance, such as with an organic acid, with an inorganic acid, with an organic base, and with an inorganic base. A biological fragment of a lysozyme may be used as the egg recognition pheromone. A biological fragment of a lysozyme is a polypeptide or peptide having a partial amino acid sequence of the lysozyme and possessing egg recognition activity similar to that of the lysozyme. Such a fragment is of a short chain, and thus is suitable for mass production by gene recombination. A lysozyme-related peptide may be used as the egg recognition pheromone. A lysozyme-related peptide refers to a protein, polypeptide, or peptide possessing egg recognition activity similar to that of a lysozyme, and is different from a lysozyme and a biological fragment thereof. A lysozyme-related peptide may be naturally derived or synthetic. One may produce and use a lysozyme, a biological fragment of a lysozyme, or a lysozyme-related peptide having, for example, an amino acid sequence which termites further prefer. In addition, one may produce and use a lysozyme, a biological fragment of a lysozyme, or a lysozyme-related peptide having, for example, an amino acid sequence which exhibits a high specificity for a specific type of termite. A biological fragment of a lysozyme, or a lysozyme-related peptide may be in the form of salts.

A β-glucosidase which can be used in the mimic eggs according to the present invention may be one which is derived from any species or produced by gene recombination. A preferable β-glucosidase is β-glucosidase derived from hen egg white. β-Glucosidase derived from hen egg white is available in large amounts and at low cost. A β-glucosidase which is employed in the present invention may or may not be purified. A β-glucosidase salt may be employed as the egg recognition pheromone. A β-glucosidase salt may be one with any salt-formable substance, such as with an organic acid, with an inorganic acid, with an organic base, and with an inorganic base. A biological fragment of a β-glucosidase may be used as the egg recognition pheromone. A biological fragment of a β-glucosidase is a polypeptide or peptide having a partial amino acid sequence of the β-glucosidase and possessing egg recognition activity similar to that of the β-glucosidase. Such a fragment is of a short chain, and thus is suitable for mass production by gene recombination. A β-glucosidase-related peptide may be used as the egg recognition pheromone. A β-glucosidase-related peptide refers to a protein, polypeptide, or peptide possessing egg recognition activity similar to that of a β-glucosidase, and is different from a β-glucosidase and a biological fragment thereof. A β-glucosidase-related peptide may be naturally derived or synthetic. One may produce and use a β-glucosidase, a biological fragment of a β-glucosidase, or a β-glucosidase-related peptide having, for example, an amino acid sequence which termites further prefer. In addition, one may produce and use a β-glucosidase, a biological fragment of a β-glucosidase, or a β-glucosidase-related peptide having, for example, an amino acid sequence which exhibits a high specificity for a specific type of termite. A biological fragment of a β-glucosidase, or a β-glucosidase-related peptide may be in the form of salts.

In the specification, a lysozyme, a salt thereof, a biological fragment or related peptide thereof may be collectively referred to as a "lysozyme."

In the specification, a β-glucosidase, a salt thereof, a biological fragment thereof, or β-glucosidase related-peptide may be collectively referred to as a "β-glucosidase."

Amounts of egg-recognition pheromone, such as a lysozyme or a β-glucosidase, to be applied to a substrate of an mimic egg according to the present invention can be readily determined by those skilled in the art, depending on various factors, such as its type (the organism from which it is derived), physicochemical properties and the like, the type of target insect pests, the type and amounts of active substances, the type and degree of desired effects, and others.

The above-described mimic eggs can contain an active ingredient(s), such as a pesticidally active ingredient, a hatch inhibitor, a reproductive inhibitor, an ingredient with growth inhibiting activity, or an insect pathogen, thereby to effect an extremely efficient extermination/control of insect pests. These active ingredients are known to those skilled in the art. Active substances which can be used in the mimic eggs according to the present invention can be any ones, as long as they can result in the achievement of extermination or control of insect pests. For example, an active substance may be one which makes it possible to disturb the behavior of insect pests, leading to the disruption of their colony. Active ingredients suitable for extermination or control of insect pests include a pesticidally active ingredient, a hatch inhibitor, a reproductive inhibitor, an ingredient with growth inhibiting activity, an insect pathogen, and the like. The type and amounts of active substance which can be used in the mimic eggs and methods according to the present invention can be selected, depending on various factors, such as the type of active substance and of target insect pests, and the type and degree of desired effects (damage to be given to target insect pests). Usually, the type and amounts of active substance are selected so as to exert desired effects sufficiently on desired insect pests. On the other hand, one also takes into account that the type and amounts of active substance are selected so as not to impair rates at which insect pests carry the mimic eggs and not to exert adverse effects on humans who use the mimic eggs and extermination methods according to the present invention and on domestic animals and useful insects around places where they are used.

An active ingredient which is used in the mimic eggs and extermination methods according to the present invention may be of one or more types. For example, use can be made of pesticidally active ingredients, such as a pyrethroid compound, an organophosphorus compound, a carbamate compound, an N-aryldiazole compound, a hydrazone compound, sulfonamide compound, a natural pesticidal ingredient, and others. In addition, it is possible that as an active ingredient, an insect growth regulator is used, such as a chitin synthesis inhibitor, a juvenile hormone-like active compound, a molting hormone-like active compound, and others. It goes without saying that active ingredients which can be used in the present invention are not limited to the above-described compounds.

An active ingredient in the mimic eggs is preferably slow-acting. An active ingredient which is used in the present invention is preferably one which produces no effects, or alternatively only a level of effect such that no influence is exerted on the behavior of insect pests, such as carrying of the mimic eggs and trophallaxis, when the insect pests carry the mimic eggs or immediately after the insect pests eat the mimic eggs, and exhibits effects after the mimic eggs are carried into the nest and trophallaxis is performed among many pest individuals. Employing active ingredients which have such slow-acting characteristics allows efficient extermination of many pest individuals within the nest to be targeted and requires reduced amounts of the active ingredients to be used. Furthermore, there is less influence on other ecological systems. Active ingredients having slow-acting characteristics and which can be used in the mimic eggs according to the present invention include, but are not limited to, a slow-acting hatch-inhibiting ingredient, a slow-acting reproduction-inhibiting ingredient, a slow-acting growth-inhibiting ingredient, in addition to a slow-acting pesticidal ingredient, such as hydramethylnon.

Various methods for making the egg recognition pheromone, such as a lysozyme and a β-glucosidase, contained in substrates are known to those skilled in the art. The pheromone substance may be mixed into a substrate during or after substrate preparation. For example, the pheromone substance may be mixed or kneaded into a substrate during substrate preparation. Alternatively, the pheromone substance may be applied to the prepared substrate by dusting, immersing, painting or spraying. Methods for immobilizing proteins, polypeptides or peptides onto solid supports are known, and thus these methods may be applied. Such immobilization methods include, for example, those by adsorption, covalent bonding, ionic bonding, entrapment, and the like. In addition, types in which the egg recognition pheromone, such as a lysozyme and a β-glucosidase, is contained in substrates are also known, and preferable specific examples include surface-coated, substrate-added, capsule-solved, and other types. As an example of surface-coated types, the surface of a substrate is coated with an active ingredient, over which a lysozyme, a β-glucosidase, or the like is further coated. As an example of substrate-added types, the surface of a substrate in which an active ingredient mixed is coated with a lysozyme, a β-glucosidase, or the like. As an example of capsule-solved types, a membranous substrate is formed into a capsule, into which an active ingredient, such as a pesticidally active ingredient, a hatch-inhibitor, a reproductive inhibitor, an ingredient with growth inhibiting activity, or an insect pathogen, is encapsulated and the substrate surface is coated with a lysozyme, a β-glucosidase, or the like.

Means and methods for containing in mimic eggs an active ingredient, such as a pesticidally active ingredient, a hatch-inhibitor, a reproductive inhibitor, an ingredient with growth inhibiting activity, or an insect pathogen, are basically similar to the above-described means and methods for making an egg recognition pheromone, such as lysozyme and a β-glucosidase contained in a substrate. Those skilled in the art could make selection and application of such means and methods as appropriate.

Making an attractant according to the present invention contained in the above-described mimic eggs can facilitate termites' behavior of egg carrying and protecting and allow termites to carry the mimic eggs into an egg mass in the nest, and therefore makes it possible for termites not simply to carry artificial mimic eggs into a nursery chamber in the nest, but also to evoke egg-grooming behavior, such as licking the surface of eggs.
The active ingredient of the attractants according to the present invention is a butanol derivative, which is preferably volatile. The volatility of the active ingredient of the attractants allows efficiently directing termites distant from an egg towards the location of the egg.

Means and methods for making an attractant according to the present invention contained in mimic eggs can be also selected and applied as appropriate, by those skilled in the art. However, means or methods which prevent volatilization of the active ingredient of the attractants according to the present invention, means or methods which inhibit the action of the egg recognition pheromone, such a lysozyme or a β-glucosidase, and means or methods which inhibit the action of the active ingredient(s), such as a pesticidally active ingredient, a hatch-inhibitor, a reproductive inhibitor, an ingredient with growth inhibiting activity, and an insect pathogen, are not prepferred. Particular means and methods for making an attractant according to the present invention contained in mimic eggs include, for example, dusting, immersing, applying, or spraying an attractant on the surface of mimic eggs, or immersing mimic eggs in an attractant solution.
In addition, the active ingredient of an attractant can be gradually released so as to extend the duration of its release by adding the attractant into a substrate, rather than by applying the attractant onto the surface of a substrate. For example, these materials may be mixed together in a substrate during substrate preparation, or an attractant according to the present invention may be contained in substrates which have been prepared. For example, the attractant may be mixed, kneaded, or impregnated in a substrate during substrate preparation.

Thus, the present invention, in a further aspect, provides a method for exterminating termites by proving a termite with a mimic egg, the mimic egg containing an egg recognition pheromone, the above-described active ingredient(s), and an attractant according to the present invention, and allowing the termite to carry the mimic egg into its nest by taking advantage of egg-carrying behavior. The method according to present invention results in a dramatically improved performance of extermination of termites.

In another embodiment, the activity of carrying mimic eggs can be also enhanced by placing an attractant according to present invention around mimic eggs. Therefore, the present invention, in another aspect, provides a method for exterminating termites, which is characterized by placing an attractant according to the present invention around a mimic egg which contains an egg recognition pheromone and one or more ingredients in a termite-egg mimicking substrate, and allowing the termite to carry the mimic egg into its nest by taking advantage of egg-carrying behavior, wherein said one or more ingredients are selected from the group consisting of a pesticidally active ingredient, a hatch inhibitor, a reproductive inhibitors, an ingredient with growth inhibiting activity, or an insect pathogen.

An attractant according to the present invention can be employed per se as an attractant for termites, besides being utilized in extermination techniques using mimic eggs. Termites which have been attracted by using an attractant according to the present invention may be gathered and captured, or alternatively treated with a pesticidally active ingredient, a hatch inhibitor, a reproductive inhibitors, an ingredient with growth inhibiting activity, an insect pathogen, or the like, thereby exterminating the termites. An attractant according to the present invention can be used as a behavior-disrupting agent, by proving termites with the attractant per se, since the attractant causes disturbance of termite social behavior.

As described above, in this study, it was found for the first time that the differentiation into termite queens was inhibited in the presence of volatile ingredients released from termite eggs and queens. And it was also found that the volatile ingredients inhibit the growth of termites. These ingredients were found to be the same as the above-described attracting ingredients. Therefore, the present invention, in a further embodiment, provides a termite growth inhibitor which contains as the active ingredient a volatile ingredient released from a termite egg and queen. The active ingredient of an termite growth inhibitor according to the present invention is one or more ingredients selected from the group consisting of butanols, and esters, ketones, ethers, carboxylic acids thereof, and salts thereof, preferably one or more ingredients selected from the group consisting of 1-butanol, 2-butanol, butyric acid ester of 1-butanol, butyric acid ester of isobutyl alcohol, and 2-methyl-1-butanol; further preferably one or more ingredient selected from the group consisting of butyl butyrate and 2-methyl-1-butanol.

The present invention will be described in a detailed and specific manner below by way of Examples. The examples which follows are intended to strictly illustrate and explain the present invention, and not to limit the present invention thereto.

### [Examples]

### Example 1

### Example 1: Preparation of mimic eggs and ascertainment of calling pheromone activity of eggs

Mimic eggs used in experiments were prepared as follows: in 10 µL of a 50% aqueous solution of glycerol were dissolved 1.0 mg of almond-derived β-glucosidase (Product #: G0395-5KU, Lot #: 047K4037, SIGMA-ALDRICH) and 1.0 mg of hen egg-white lysozyme (Product #: L7651-10G, Lot #: 056K16901, SIGMA-ALDRICH) desalted with a SnakeSkin dialysis membrane (7000 MWCO, Product #: 68700, PIERCE) to prepare an artificial egg-recognition pheromone solution. 2.0 µL of the artificial egg-recognition pheromone solution was added to one hundred of glass beads having a diameter of 0.5 mm and mixed well for coating the surface of the beads with the solution.

Prior to experiments, in order to settle a termite nest within a petri dish, preparation was made as follows: In a 90-mm diameter petri dish was placed a medium for termites, as shown in Fig. 1, which has diameter of 30 mm and a thickness of 7 mm and was made by compression of brown-rot Japanese red pine wood powder and cellulose powder. Two hundred of worker termites were put on the medium and allowed to stand for one week to form a nest within the medium.

As shown in Fig. 1, a stainless steel mesh cylinder having a diameter of 1 cm was positioned on the opposite side of the termite nest in the petri dish, and 100 termite eggs were placed inside the cylinder. The top of the cylinder was covered with a plastic cover, in order to prevent the worker termites from entering inside the mesh cylinder. A 100%-pulp non-woven cloth, which was cut 5-mm wide, was placed outside and along the wire mesh and wetted appropriately with distilled water. The wetted non-woven cloth, which was placed outside and along the wire mesh, was not in contact with the eggs in the inside of the wire mesh, so that the water-soluble ingredient(s) on the surface of the eggs were not leached to the outside of the wire mesh. In addition, the wire mesh allowed none of the termites to touch any eggs from the outside thereof.

On the non-woven cloth, 20 mimic eggs, which were obtained by the above-described procedures, were placed outside and along the wire mesh and allowed to stand at 25°C. At 24 hours after the start of the experiment, the rate of carrying mimic eggs into the nest was determined. As a control, a treatment was set in which no eggs were placed inside the mesh cylinder. The control was treated in the same way as in the egg-containing treatment, except for placing no termite eggs inside the mesh cylinder.

Five repetitions were made for each treatment. Carrying rates were subjected to arcsine-root transformation, followed by statistical comparison to the control using a two-sided T-test. Fig. 2 shows carrying rates after 24 hours of carrying into the egg mass mimic eggs coated with each test sample.

The presence of eggs in the inside of the wire mesh extremely strongly attracted scout workers and activated the egg-carrying behavior of the worker termites, giving a significantly enhanced rate of carrying mimic eggs placed outside the wire mesh (T = 3.95, P < 0.01, two-sided T-test).

### Example 2

### Example 2: GC-MS analysis of egg volatile calling pheromone

0.47 g of Reticulitermes speratus termite eggs was collected in a head-space tube and weighed. This analysis employed a Nippon Denshi (JOEL) JMS-700 GC-MS instrument (acceleration voltage: 5 kV, mass coverage: m/z 10 to 300), which was set at an ionization voltage of 70 eV, an ionization current of 100 pA, and an ionization chamber temperature of 220°C. GC conditions were as follows: column: ZB-1, 60 m x 0.32 mm x 3 µm; inlet mode: split (1/15), splitless mode; helium flow: 1.5 ml/min; inlet temperature: 150°C; oven temperature: 40°C (5 min) to 250°C at 10 °C/min; injection volume: 2 ml.

First, the surrounding air was analyzed as a blank sample. Then, 1 ml of the gas accumulated in the space of the head-space tube having 0.47 g termite eggs placed therein was collected and analyzed under split conditions. By comparison of the chromatograms, the presence of two substances was able to be identified, although their spectra had poor s/n ratios. Measurements were performed under splitless conditions and clear spectra were obtained. By library searching, Peak 1 was attributable to butyric acid normal butyl ester (butyl butyrate) or butyric acid isobutyl ester (2-butyl butyrate). Peak 2 was attributable to 2-methyl-1-butanol. Similar spectra were obtained when measurements for verification of these estimations were performed using 0.64 g sample.

### Example 3

### Example 3: Examination of egg-released calling pheromone samples

2.0 mg of white-egg lysozyme and 1.0 mg of β-glucosidase were dissolved in a 50% aqueous solution of glycerol (a mixture of lysozyme and β-glucosidase). To this reference pheromone solution were added a 10% aqueous solution of each of the following volatile ingredient samples to examine the effect of enhancing the activity of carrying mimic eggs. The added samples were: butyl butyrate, 1-butanol, 2-butyl butyrate, 2-butanol, 2-methyl-1-butanol, and n-butyl acetate. The ingredients of the volatile pheromone revealed by GC-MS analysis were esters of butyric acid, which are usually hydrolyzed into butyric acid and the corresponding alcohols (1-butanol or 2-butanol) in the presence of water. Therefore, examinations were made also on 1-butanol and 2-butanol, in addition to the esters. From the results of preliminary experiments, however, butyric acid had no effect of increasing the egg-carrying activity.

To 100 glass beads having a diameter of 0.5 mm were added 2.0 µL/bead of the above-described reference pheromone solution and 2.0 µL/bead of each of the test sample solutions and mixed well for coating the surface of the beads with each test sample.

Ten termite eggs and 20 mimic eggs obtained by the above-described procedures were randomly placed on a petri dish having a diameter of 30 mm, in which 10 Reticulitermes speratus worker termites were put and allowed to stand in a temperature-controlled room at 25°C. At 24 hours after the start of the experiment, the rate of carrying mimic eggs into the egg mass was determined (for each of the test samples, experiments were made on the same procedures). Three repetitions were made for each treatment. Carrying rates were subjected to arcsine-root transformation, followed by statistical comparison by analysis of variance and Tukey-Kramer HSD test. The worker termites gathered the spread eggs and formed the egg mass, and exhibited protection behavior. Figs. 6 to 11 show rates of carrying mimic eggs coated with each of the test samples into the egg mass after 24 hours.

The addition of each of 1-butanol, 2-butanol, and 2-methyl-1-butanol resulted in a remarkable increase in the egg recognition activity, and after 24 hours, the treatments with the addition of each of these volatile ingredients had an egg recognition activity significantly higher than the non-added treatment using only lysozyme and β-glucosidase (see Figs. 7, 9, and 10; P < 0.05, Tukey-Kramer HSD test). The butyl butyrate and 2-butyl butyrate gave no statistical significance, but were observed to have a tendency to enhance the activity of carrying mimic eggs (Figs. 6 and 8). The n-butyl acetate ha no effect of enhancing the activity of carrying mimic eggs (Fig. 11).

### Example 4

Example 4: GC-MS analysis of queen volatile pheromone 0.7 grams of Reticulitermes speratus termite queens (equal to 100 termite individuals) was collected in a head-space tube and weighed. This analysis was performed in a similar way as in Example 2. First, the surrounding air was analyzed as a blank sample. Then, 1 ml of the gas accumulated in the space of the head-space tube having termite queens placed therein was collected and analyzed under split conditions. By comparison of the chromatograms, the presence of two substances was able to be identified and clear spectra were obtained. By library searching, Peak 1 was attributable to butyric acid normal butyl ester (butyl butyrate) or butyric acid isobutyl ester (2-butyl butyrate). Peak 2 was attributable to 2-methyl-1-butanol. These ingredients were in complete accordance with the ingredients of the egg-released volatile calling pheromone in Example 2.

### Example 5

### Example 5: Examination of inhibitory effect on the differentiation into new termite queens by queen volatile pheromone samples

A 100%-pulp non-woven cloth was placed on the bottom of a small plastic petri dish having a diameter of 30 mm and wetted appropriately with distilled water, and 100 Reticulitermes speratus worker termites were put in the petri dish. Seven small petri dish, each of which had 100 worker termites, were put in a large petri dish having a diameter of 14 cm, in the center of which was placed an unglazed ball having a diameter of 7 mm and containing the volatile pheromone was placed. A hole having a diameter of 1 mm was drilled in the cover of each of the small petri dishes, so that the volatilized pheromone was allowed to enter inside through the hole (Fig. 13). To the unglazed ball were dropwise added 5 µL of butyl butyrate and 2.5 µL of 2-methyl-1-butanol every day and absorbed, so as to cause their gradual release. The petri dishes were allowed to stand at 25°C. At 25 days after the start of the experiment, all the termite individuals were collected, the numbers of living worker termites and of termite queens differentiated from worker termites (worker-derived female supplementary reproductives) were counted. Seven repetitions were made for each treatment. Statistical comparison was performed using analysis of variance and Turkey-Kramer HSD test. There was no significant decrease in the viability by the addition of the pheromone ingredients.

A treatment in which only the same volume of distilled water, instead of each of the pheromone ingredients, was provided at the same frequency served as Control 1, and a treatment in which 5 µL of butyl acetate was provided served as Control 2.

The administration of a mixed pheromone of butyl butyrate and 2-methyl-1-butanol resulted in a significant inhibition of the differentiation into new termite queens (see Fig. 14; P < 0.05, Tukey-Kramer HSD test). The n-butyl acetate was observed to have no effect of inhibiting the differentiation into new termite queens (Fig. 14).

### [Industrial Applicability]

The present invention provides effective extermination and control, particularly of termites, and can be used in the fields of production of pesticides, of the pest control industry, building industry, and gardening industry, and others.

## Claims

1. A termite attractant comprising one or more active ingredients selected from the group consisting of butanols, and esters, ketones, ethers, carboxylic acids thereof, and salts thereof.

2. A termite attractant comprising one or more active ingredients selected from the group consisting of 1-butanol, 2-butanol, butyric acid ester of 1-butanol, butyric acid ester of isobutyl alcohol, and 2-methyl-1-butanol.

3. A termite attractant comprising one or more active ingredients selected from the group consisting of 1-butanol, 2-butanol, or 2-methyl-1-butanol.

4. A mimic termite-egg comprising an egg recognition pheromone and a termite attractant according to any one of claims 1 to 3 in a termite-egg mimicking substrate.

5. The mimic termite-egg according to claim 4, wherein the egg recognition pheromone is a β-glucosidase and/or a lysozyme.

6. A mimic termite-egg comprising a β-glucosidase as an egg recognition pheromone and a termite attractant according to any one of claims 1 to 3 in a termite-egg mimicking substrate.

7. The mimic egg according to any one of claims 4 to 6, which further comprises one or more ingredients selected from the group consisting of a pesticidally active ingredient, a hatch inhibitor, a reproductive inhibitor, an ingredient with growth inhibiting activity, or an insect pathogen.

8. A method for exterminating termites, which comprises proving a termite with a mimic egg according to claim 7, and allowing the termite to carry the mimic egg into its nest by taking advantage of egg-carrying behavior.

9. A method for exterminating termites, which comprises placing a termite attractant according to any one of claims 1 to 3 around a mimic egg which contains an egg recognition pheromone, and one or more ingredients selected from the group consisting of a pesticidally active ingredient, a hatch inhibitor, a reproductive inhibitors, an ingredient with growth inhibiting activity, or an insect pathogen in a termite-egg mimicking substrate; and allowing the termite to carry the mimic egg into its nest by taking advantage of egg-carrying behavior.

10. A method for exterminating termites, which comprises employing a termite attractant according to any one of claims 1 to 3 to attract termites; and exterminating the attracted termites.

11. A method for disturbing the behavior of a termite, which comprises providing a termite attractant according to any one of claims 1 to 3 to a termite, thereby to disturb the behavior of the termite.

12. A termite growth inhibitor comprising one or more active ingredients selected from the group consisting of butanols, and esters, ketones, ethers, carboxylic acids thereof, and salts thereof.

13. A termite growth inhibitor comprising one or more active ingredients selected from the group consisting of 1-butanol, 2-butanol, butyric acid ester of 1-butanol, butyric acid ester of isobutyl alcohol, and 2-methyl-1-butanol.

14. A termite growth inhibitor comprising one or more active ingredients selected from the group consisting of butyl butyrate and 2-methyl-1-butanol.
